# EUROPÄISCHE PATENTSCHRIFT

(11) **EP 1 636 911 B1**
(45) Veröffentlichungstag und Bekanntmachung des Hinweises auf die Patenterteilung: **03.01.2007**
(21) Anmeldenummer: 04731344.0
(22) Anmeldetag: 06.05.2004
(51) Int. Cl.: H04B 1/20

(54) **FERNBEDIENUNG ZUR ABGABE VON BEFEHLEN AN EIN FERNBEDIENBARES GERÄT**
REMOTE CONTROL FOR ISSUING COMMANDS TO A REMOTE-CONTROLLED DEVICE
TELECOMMANDE POUR DONNER DES ORDRES A UN APPAREIL TELECOMMANDE

(30) Priorität: 25.06.2003 DE 10328588
(43) Veröffentlichungstag der Anmeldung: 22.03.2006
(73) Patentinhaber: SIEMENS AKTIENGESELLSCHAFT, 80333 München (DE)
(72) Erfinder: HOFER, Jürgen, A-1180 Wien (AT); JATSCHKA, Thomas, A-2102 Kleinengersdorf (AT); POHL, Alfred, A-2130 Mistelbach (AT); TSCHOFEN, Robert, A-1050 Wien (AT)
(86) Internationale Anmeldenummer: PCT/EP2004/004847
(87) Internationale Veröffentlichungsnummer: WO 2005/002076

(56) Entgegenhaltungen:
- DE-A- 4 442 224
- US-A- 5 052 943
- US-A- 5 410 326
- US-A- 5 625 180
- US-A- 6 084 381

## Beschreibung

Die Erfindung bezieht sich auf eine Fernbedienung zur Abgabe von Befehlen an ein fernbedienbares Gerät auf drahtlosem Weg, bei welcher vor Inbetriebnahme ein Zuordnungsmodus ablaufen kann, und mit einem Akkumulator zur Stromversorgung.

Bei Fernbedienungen oder Fernsteuerungen für industrielle Geräte oder landwirtschaftliche Geräte liegen besondere Anforderungen vor. Einerseits verbietet der raue Betrieb filigrane leicht verschmutzende Steckkontakte zum Zwecke des Ladens oder einer Informationsübertragung, andererseits soll aus sicherheitstechnischen Gründen eine sichere und eindeutige Zuordnung einer Fernbedienung zu einem Gerät möglich sein. Die versehentliche Bedienung und Inbetriebnahme eines "fremden" Geräts könnte nicht nur materiellen Schaden verursachen, sondern auch das Leben und die Gesundheit von Personen gefährden. US-A-5,625,180 (Hanson et al.) offenbart eine Stromlackvorrichtung für ein tragbares Gerät.

Bei bekannten Fernbedienungen erfolgt eine Zuordnung oder Neuzuordnung in einem Zuordnungsmodus, der z. B. nach Eingabe eines PIN-Codes an der Fernbedienung über die Funkschnittstelle, die auch zur Fernsteuerung verwendet wird. Dadurch ist bereits die Gefahr gegeben, dass in Funkreichweite befindliche andere Geräte ungewollt "angesprochen" werden. Dies gilt sinngemäß für Fernbedienungen, welche zur drahtlosen Datenübertragung Infrarot oder Ultraschall benützen.

Eine Aufgabe der Erfindung liegt darin bei Fernbedienungen der hier betrachteten Art die beschriebenen Nachteile zu beseitigen.

Diese Aufgabe wird mit einer Fernbedienung der eingangs angegebenen Art erreicht, bei welcher erfindungsgemäß an dem fernbedienbaren Gerät eine Andockstelle für die Fernbedienung vorgesehen ist, an welcher die Fernbedienung vorübergehend fixierbar ist, an der Andockstelle über eine induktive Energieschnittstelle Ladeenergie für den Akkumulator von dem Gerät in die Fernbedienung speisbar ist, und an der Andockstelle eine Informationsübertragung zumindest für die Initialisierung des Zuordnungsmodus durchführbar ist.

Dank der Erfindung kann an der Andockstelle nicht nur ein Aufladen des Akkumulators ohne Kontaktierungsprobleme erfolgen, sondern es wird hier auch der Zuordnungsmodus zum Ablauf gebracht oder zumindest eingeleitet.

Besonders vorteilhaft ist es, wenn die Energieschnittstelle eine gerätefeste Übertragerhälfte mit zumindest einer Spule sowie eine bedienungsfeste Übertragerhälfte mit zumindest einer Spule aufweist, und die Übertragerhälften bei angedockter Fernbedienung einen Übertrager bilden. Dabei ist unter "Übertragerhälfte" im Rahmen der Erfindung nicht nur genau die Hälfte des Übertragers zu verstehen, sondern "Hälften" bedeutet hier "zwei Teile, die sich zu einem Übertrager ergänzen".

Eine zweckmäßige Variante der Fernbedienung zeichnet sich dadurch aus, dass zu ihrem Fixieren an dem Gerät eine Magnethalterung vorgesehen ist. Bei einem solchen Fixieren können glatte, leicht zu reinigende Oberflächen an der Andockstelle vorhanden sein.

Sinnvoll ist es weiters, wenn jede Übertragerhälfte einen Kern besitzt und zumindest der Kern einer Übertragerhälfte einen Permanentmagnet beinhaltet. In diesem Fall kommt dem Übertragerkern zusätzlich die Funktion eines magnetomechanischen Haltekreises zu.

Bei einer vorteilhaften Ausführung der Erfindung ist der Übertrager zur Informationsübertragung hinsichtlich des Initialisierungsmodus herangezogen. Dadurch erfolgt eine zusätzliche Nutzung des Übertragers.

Eine einfach realisierbare Variante sieht hierbei vor, dass die zumindest eine Spule der bedienungsfesten Übertragerhälfte mit einer steuerbaren Impedanz belastbar ist, welche mit einer festgelegten Kennfrequenz schaltbar ist. Dabei kann im Stromkreis der zumindest einen Spule der gerätefesten Übertragerhälfte ein der Kennfrequenz zugeordneter Filter vorgesehen sein.

Die Erfindung samt weiteren Vorteilen ist im folgenden anhand beispielsweiser Ausführungsformen näher erläutert, die in der Zeichnung veranschaulicht sind. In dieser zeigen
- Fig. 1: in schematischer Seitenansicht ein Gerät, z. B. einen fahrbaren Ladekran, mit daran angedockter Fernbedienung,
- Fig. 2: die Andockstelle der Fig. 1 vergrößert und teilweise geschnitten, in schematischer Darstellung,
- Fig. 3: die Prinzipschaltung zur Informationsübertragung im Initialisierungsmodus bei einer möglichen Ausführungsform,
- Fig. 4: einen möglichen Initialisierungsablauf in einem Flussdiagramm.

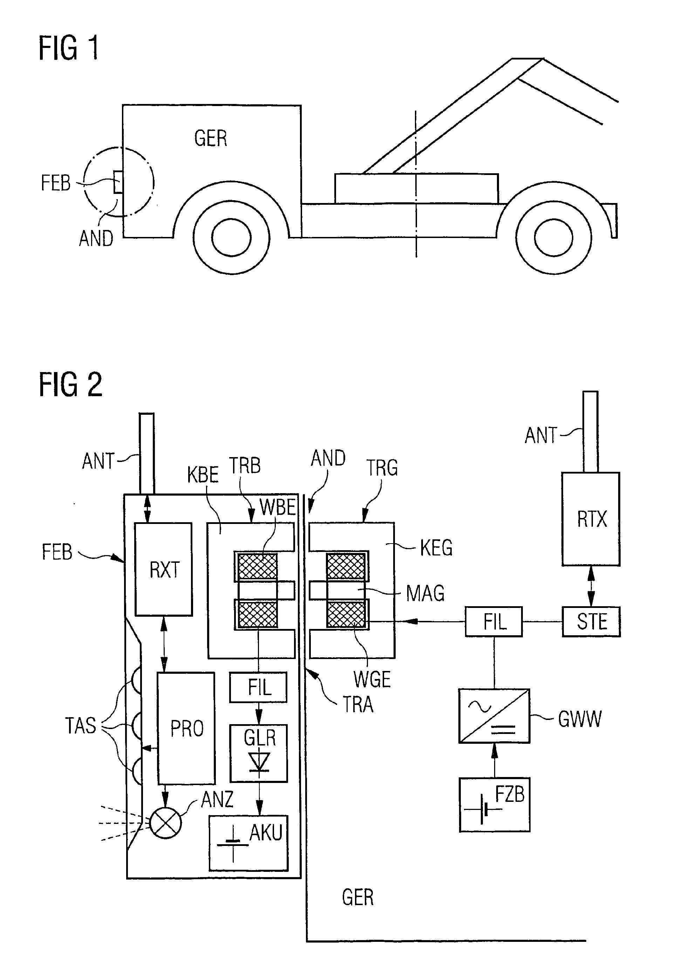

Fig. 1 zeigt ein Gerät GER, z. B. einen fahrbaren Ladekran, ganz allgemein ein industrielles oder landwirtschaftliches Gerät, welches mit einer Fernbedienung auf drahtlosem Weg bedienbar ist. Eine solche, von einer Bedienungsperson in der Hand haltbare Fernbedienung FEB ist gemäß Fig. 1 an einer Andockstelle AND des Geräts GER vorübergehend fixiert, entweder nur mechanisch, mit Hilfe einer geeigneten Halterung, oder durch eine Magnethalterung, was weiter unten erläutert wird.

Nähere Details zeigt Fig. 2 in der schematischen gegenüber Fig. 1 stark vergrößerten Schnittdarstellung. Das Gerät GER enthält eine Übertragerhälfte TRG, die einen Kern KEG, hier einem Topfkern, sowie eine Spule WGE oder Wicklung besitzt. Der Kern KEG beinhaltet einen Permanentmagnet MAG, der im vorliegenden Fall den zentralen Kernteil des Kern KEG bildet. Bei Varianten kann der Magnet an anderen Stellen angeordnet sein, wobei immer wesentlich ist, dass er seine Haltefunktion für die Fernbedienung FEB erfüllt.

In der Fernbedienung FEB ist, quasi spiegelbildlich eine zweite, bedienungsfeste Übertragerhälfte TRB angeordnet, welche gleichfalls einen Kern KBE sowie eine Wicklung bzw. Spule WBE besitzt. Die "offenen" Seiten der beiden Übertragerhälften TRB, TRG sind unmittelbar an einer Außenwand des Gehäuses der Fernbedienung bzw. des Geräts GER angeordnet und lediglich durch die jeweilige Gerätewandung, die aus Kunststoff oder einem nicht magnetisierbaren Metall besteht, abgedeckt.

Es geht aus Fig. 2 unmittelbar hervor, dass die Fernbedienung FEB in der dargestellten Weise an dem Gerät GER vorübergehend fixierbar ist, da die beiden Kerne bzw. Kernhälften KEB, KEG wegen des in ihrem magnetischen Kern enthaltenen Permanentmagneten MAG einander anziehen.

An dieser Stelle sei angemerkt, dass auch der Kern KBE in der Fernbedienung FEB einen Permanentmagnet enthalten kann, Dessen Polung kann bei bestimmten Fernbedienungen so gewählt sein, dass im Zusammenwirken mit bestimmten Geräten an der Andockstelle die entsprechend markiert sein kann, kein Anziehen sondern ein Abstoßen auftritt. Dadurch können Paarungen von Fernbedienungen und Geräten von vornherein als unerlaubt angezeigt werden.

Die Andockstelle AND dient als induktive Energieschnittstelle, an welcher Ladeenergie von dem Gerät GER in einen Akkumulator AKU der Fernbedienung FEB speisbar ist, was im folgenden erläutert sei.

In dem Gerät GER befindet sich eine Stromquelle, z. B. eine Fahrzeugbatterie mit 24 oder 48 Volt Spannung. Diese Batteriespannung wird über einen Gleichspannungs-/Wechselspannungswandler GWW in eine Wechselspannung gewandelt und als solche der Spule WEG zugeführt. Falls man auf eine Wechselspannung mit 50 Hz wandelt, besteht eine Kompabilität der Fernbedienung FEB zu einfachen netzgespeisten Ladegeräten. Nicht gezeigt, jedoch für den Fachmann klar ist es, dass der Wandler GWW erst beim Andocken der Fernbedienung aktiviert wird, beispielsweise mit Hilfe eines berührungslosen Schalters, wie eines Reed-Kontaktes.

Die in der Sekundärspule WBE des Übertragers TRA induzierte Wechselspannung wird z. B. mittels eines Gleichrichters GLR gleichgerichtet und dem Akkumulator AKU zugeführt, um ihn zu laden. Selbstverständlich können je nach Typ des Akkumulators geeignete und dem Fachmann bekannte Lade- und Regelschaltungen zur Anwendung kommen. Ebenso kann eine Anzeige des Ladestatus und Ladevorganges erfolgen.

Die Fernbedienung FEB besitzt eine Sende-/Empfangseinheit RTX, welche mit einer Antenne ANT zusammenwirkt. Weiters ist eine Steuerung PRO, z. B. ein Mikroprozessor vorgesehen, der auch Teil der Sende-/Empfangseinheit RTX sein kann. Tasten TAS einer Tastatur ermöglichen die Eingabe von Befehlen an die Steuerung PRO und über die Sende-/Empfangseinheit RTX und die Antenne ANT an das Gerät GER, das eine entsprechende hier nicht gezeigte Gegenstation für den Funkverkehr besitzt.

Ebenso wie die Fernbedienung FEB besitzt auch das Gerät GER eine Sende-/Empfangseinheit RTX mit einer Antenne ANT, wobei sowohl in der Fernbedienung FEB über die Steuerung PRO als auch in dem Gerät GER über die Steuerung STE wichtige Funktionen der Sende-/Empfangseinheit, wie hier insbesondere die Sendeleistung und die Empfängerempfindlichkeit beeinflussbar sind.

Zweckmäßigerweise wird ein bekannter Funkstandard für die drahtlose Kommunikation zwischen Fernbedienung FEB und Gerät GER verwendet, z. B. Bluetooth.

Alternativ ist auch die Verwendung von Ultraschall oder Infrarot zur Informationsübertragung möglich.

Die Erfindung sieht des weiteren vor, dass an der Andockstelle, die wie oben erläutert, zunächst der Energieübertragung für das Laden des Akkumulators dient, auch eine Informationsübertragung durchgeführt werden kann, welche den Zuordnungsmodus betrifft. Diese Informationsübertragung an der Andockstelle kann auf vielfältige Weise erfolgen und einige Möglichkeiten werden nachstehend erläutert.

Fig. 2 zeigt die Möglichkeit der Informationsübertragung über den Übertrager TRA, wobei sowohl in der Fernbedienung FEB als auch in dem Gerät GER über ein Filter FIL Signale ausgekoppelt werden können, die von der Steuerung PRO in der Fernbedienung FEB und einer Steuerung STE in dem Gerät GER über die Übertragerschnittstelle TRA gesandt werden können und umgekehrt.

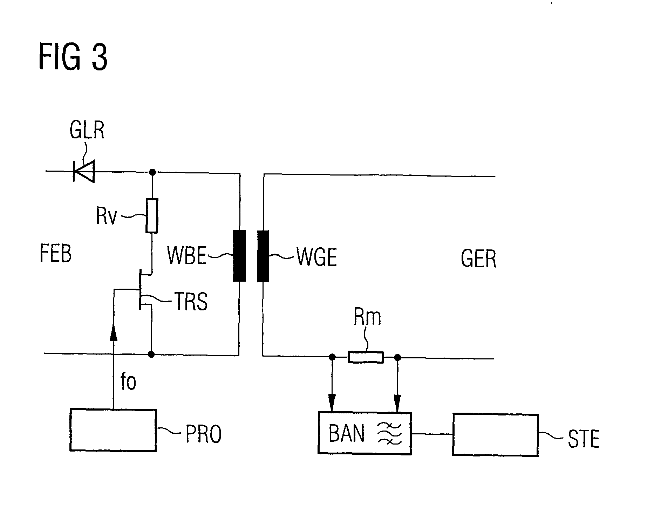

Eine einfache Möglichkeit einer Informationsübertragung im Sinne des "Erkennens" einer Fernbedienung ist in Fig. 3 skizziert. Die Spule WBE der Übertragerhälfte in der Fernbedienung ist von einem Transistor TRS, ggf. in Serie mit einem Vorwiderstand Rr überbrückt. Der Transistor TRS kann von der Steuerung PRO der Fernbedienung FEB mit einer vorbestimmten individuellen Frequenz f₀ z. B. 1 kHz angesteuert werden, sodass sich die Impedanz dementsprechend stark ändert. Diese periodischen Änderungen führen geräteseitig an einem Messwiderstand Rm zu einem Spannungsabfall und ein auf die individuelle Frequenz abgestimmtes Filter BAN liefert das resultierende Signal an die Steuerung STE des Geräts.

Wird eine Fernbedienung FEB an das Gerät GER angedockt, so kann der Akkumulator AKU unmittelbar geladen werden. Weiters kann nur durch eine Strom- oder Impedanzmessung seitens des Geräts erkannt werden, dass eine Fernbedienung vorhanden ist.

Bei einer Messung z. B. nach Fig. 3 ist auch eine Identifizierung möglich. Es können weiters über die Übertragerschnittstelle TRA Daten, wie ein Schlüssel, eine PIN etc. ausgetauscht werden. Es kann aber auch bereits ein Funkmodus initialisiert werden, welcher z. B. bei Bluetooth ein Zuordnen der Funkkennungen von Fernbedienung FEB und Gerät GER bewirkt. Gleichzeitig kann auf diesem Weg ein Anpassen der Parameter der Fernbedienung an den Typ des zu bedienenden Geräts bzw. die Übertragung von Bedienparametern an die Fernbedienung erfolgen. Um sicherzustellen, dass die Daten im Zuordnungsmodus vollständig übertragen wurden, kann das Ende und/oder der Verlauf der Datenübertragung angezeigt werden, z. B. mit einer Anzeige-Lichtquelle ANZ.

Die eigentliche Bedienung des Geräts GER erfolgt vorzugsweise über Funk mittels der üblicherweise von einer Bedienungsperson in der Hand gehaltenen Fernbedienung, wobei meist einige Eingabetasten TAS auf einem Tastenfeld ausreichen. Mehrere oder auch nur eine dieser Tasten können bei angedockter Fernbedienung dazu verwendet werden, den Ablauf des Zuordnungsmodus zu starten, so dass keine komplizierten Eingaben über alphanumerische Tastenfelder notwendig sind. Der für die Zuordnung erforderliche Datenaustausch läuft dann automatisch ab.

Da die Zuordnung an der Andockstelle erfolgt, ist es auch möglich, die dazu erforderlichen Daten über Funk zu übertragen, wobei die Funkreichweite soweit herabgesetzt werden kann, dass ein Funkverkehr mit andern Einheiten auszuschließen ist. Als Beispiel für einen Identifizierungs- und Zuordnungsvorgang ist beispielsweise für den Bluetooth-Standard beschrieben in: "LMP Lager Tutorial", 3. 1. 2 Authentication, 3. 1. 3 Pairing (im www frei zugänglich unter http://203.147.194.107/infotooth/tutorial/lmp.asp).

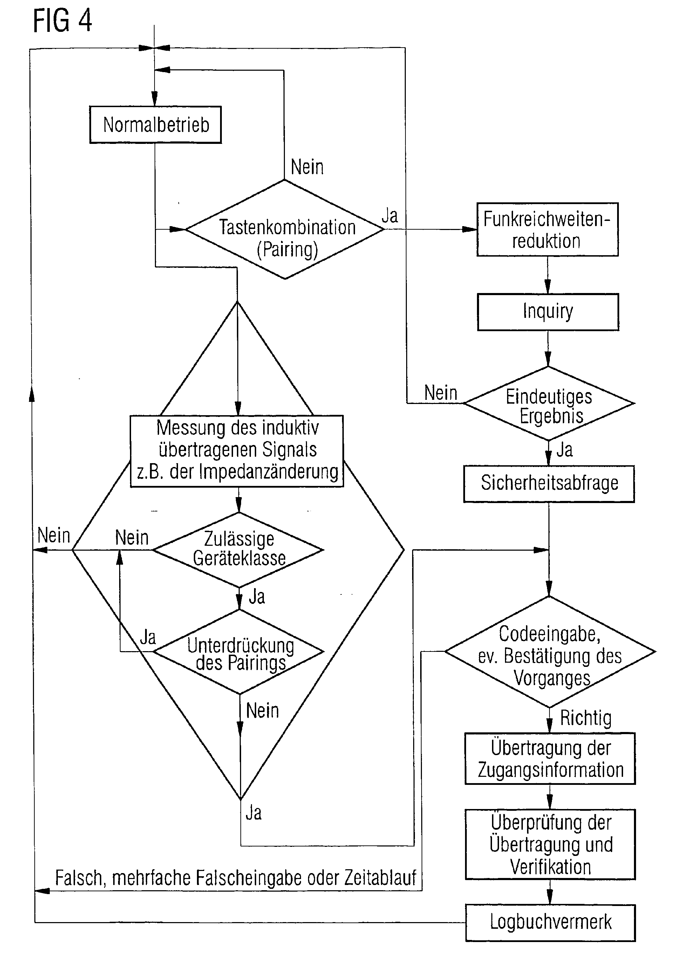

Zur Erläuterung eines möglichen Initialisierungsablaufs sei auf Fig. 4 verwiesen, in welcher ein solcher Ablauf, beginnend mit dem Andocken dargestellt ist. In diesem Ablauf wird auch von der vorhin erwähnten, jedoch keineswegs zwingenden Funkübertragung mit Reduktion der Reichweite Gebrauch gemacht.

Es ist auch erwähnenswert, dass die Andockstelle mit ihrer (zusätzlichen) induktiven Schnittstelle die Möglichkeit des Anschlusses z. B. eines Notebooks oder eines anderen Servicegerätes durch einen Servicetechniker bietet. Ein mit dem Servicegerät verbundenes Kabel kann z. B. einen "Haftkopf" besitzen, der - ebenso wie die Fernbedienung - die ergänzende Hälfte des Übertragers TRA beinhaltet.

## Patentansprüche

1. Fernbedienung (FEB) zur Abgabe von Befehlen an ein fernbedienbares Gerät (GER) auf drahtlosem Weg, bei welcher vor Inbetriebnahme ein Zuordnungsmodus ablaufen kann, und mit einem Akkumulator (AKU) zur Stromversorgung,
**dadurch gekennzeichnet, dass** an dem fernbedienbaren Gerät (GER) eine Andockstelle (AND) für die Fernbedienung (FEB) vorgesehen ist, an welcher die Fernbedienung vorübergehend fixierbar ist,
an der Andockstelle (AND) über eine induktive Energieschnittstelle (TRA) Ladeenergie für den Akumulator (AKU) von dem Gerät (GER) in die Fernbedienung (FEB) speisbar ist, und
an der Andockstelle (AND) eine Informationsübertragung zumindest für die Initialisierung des Zuordnungsmodus durchführbar ist.

2. Fernbedienung (FEB) nach Anspruch 1,
**dadurch gekennzeichnet, dass** die Energieschnittstelle (TRA) eine gerätefeste Übertragerhälfte (TRG) mit zumindest einer Spule (WGE) sowie eine bedienungsfeste Übertragerhälfte (TRB) mit zumindest einer Spule (WBE) aufweist, und die Übertragerhälften (TRG, TRB) bei angedockter Fernbedienung (FEB) einen Übertrager (TRA) bilden.

3. Fernbedienung (FEB) nach Anspruch 1 oder 2,
**dadurch gekennzeichnet, dass** zu ihrem Fixieren an dem Gerät (GER) eine Magnethalterung (MAG, KEG, KEB) vorgesehen ist.

4. Fernbedienung (FEB) nach Anspruch 2 und 3,
**dadurch gekennzeichnet, dass** jede Übertragerhälfte (TRB, TRG) einen Kern (KEB, KEG) besitzt und zumindest der Kern (KEG) einer Übertragerhälfte einen Permanentmagnet (MAG) beinhaltet.

5. Fernbedienung (FEB) nach einem der Ansprüche 1 bis 4,
**dadurch gekennzeichnet, dass** der Übertrager (TRA) zur Informationsübertragung hinsichtlich des Initialisierungsmodus herangezogen ist.

6. Fernbedienung (FEB) nach Anspruch 5,
**dadurch gekennzeichnet**, das die zumindest eine Spule (WBE) der bedienungsfesten Übertragerhälfte (TRB) mit einer steuerbaren Impedanz (TRS, Rv) belastbar ist, welche mit einer festgelegten Kennfrequenz (f₀) schaltbar ist.

7. Fernbedienung (FEB) nach Anspruch 6,
**dadurch gekennzeichnet, dass** im Stromkreis der zumindest einen Spule (WGE) der gerätefesten Übertragerhälfte (TRG) ein der Kennfrequenz (f₀) zugeordneter Filter (BAN) vorgesehen ist.

## Claims

1. Remote control (FEB) for wirelessly issuing commands to a remotely controllable device (GER), said remote control being able to execute an assignment mode prior to startup and having a rechargeable battery (AKU) for supplying power,
**characterised in that** there is provided on the remotely controllable device (GER) a docking point (AND) for the remote control (FEB) to which the remote control can be temporarily fixed,
at the docking point (AND) charging power for the rechargeable battery (AKU) can be fed from the device (GER) to the remote control (FEB) via an inductive power interface (TRA), and
at the docking point (AND) information transmission can be performed at least for initialisation of assignment mode.

2. Remote control (FEB) according to claim 1,
**characterised in that** the power interface (TRA) has a transformer half (TRG) fixed-mounted in the device and having at least one coil (WGE) as well as a transformer half (TRB) fixed-mounted in the remote control and having at least one coil (WBE), and that the transformer halves (TRG, TRB) form a transformer (TRA) when the remote control (FEB) is docked.

3. Remote control (FEB) according to claim 1 or 2,
**characterised in that** there is provided a magnetic mount (MAG, KEG, KEB) for fixing it to the device (GER).

4. Remote control (FEB) according to claim 2 and 3,
**characterised in that** each transformer half (TRB, TRG) possesses a core (KEB, KEG) and at least the core (KEG) of one transformer half has a permanent magnet (MAG).

5. Remote control (FEB) according to one of claims 1 to 4,
**characterised in that** the transformer (TRA) is used for information transmission in respect of initialisation mode.

6. Remote control (FEB) according to claim 5,
**characterised in that** the one or more cores (WBE) of the transformer half (TRB) fixed-mounted in the remote control can be loaded with a controllable impedance (TRS, Rv) which is switchable with a defined characteristic frequency (f₀).

7. Remote control (FEB) according to claim 6,
**characterised in that** in the circuit of the one or more coils (WGE) of the transformer half (TRG) fixed-mounted in the device there is provided a filter (BAN) tuned to the characteristic frequency (f₀) .

## Revendications

1. Télécommande (FEB) pour envoyer sans fil des ordres à un appareil télécommandé (GER), dans laquelle un mode d'association peut être exécuté avant la mise en service et qui comporte un accumulateur (AKU) pour assurer l'alimentation en courant,
**caractérisée en ce que**
- l'appareil télécommandé (GER) comporte un point d'insertion (AND) destiné à la télécommande (FEB) et auquel la télécommande peut être temporairement fixé,
- de l'énergie de chargement pour l'accumulateur (AKU) peut être fournie par l'appareil (GER) dans la télécommande au point d'insertion (AND) par l'intermédiaire d'une interface d'énergie (TRA) inductive et
- une transmission d'information peut avoir lieu au point d'insertion (AND) au moins pour initialiser le mode d'association.

2. Télécommande (FEB) selon la revendication 1, **caractérisée en ce que** l'interface d'énergie (TRA) comporte une moitié de transmetteur (TRG) liée à l'appareil et munie d'au moins une bobine (WGE) ainsi qu'une moitié de transmetteur (TRB) liée à la commande et munie d'au moins une bobine (WBE) et que les moitiés de transmetteur (TRG, TRB) forment un transmetteur (TRA) quand la télécommande (FEB) est insérée.

3. Télécommande (FEB) selon la revendication 1 ou 2, **caractérisée en ce qu'**un support magnétique (MAG, KEG, KEB) est prévu pour la fixer à l'appareil (GER).

4. Télécommande (FEB) selon les revendications 2 et 3, **caractérisée en ce que** chaque moitié de transmetteur (TRB, TRG) a un noyau (KEB, KEG) et qu'au moins le noyau (KEG) d'une moitié de transmetteur contient un aimant permanent (MAG).

5. Télécommande (FEB) selon l'une des revendications 1 à 4, **caractérisée en ce que** le transmetteur (TRA) est utilisé pour transmettre les informations relatives au mode d'initialisation.

6. Télécommande (FEB) selon la revendication 5, **caractérisée en ce que** l'au moins une bobine (WBE) de la moitié de transmetteur (TRB) liée à la commande peut être sollicitée par une impédance (TRS, Rv) réglable qui peut être commutée à une fréquence caractéristique (f₀) déterminée.

7. Télécommande (FEB) selon la revendication 6, **caractérisée en ce qu'**un filtre (BAN) associé à la fréquence caractéristique (f₀) peut alors être prévu dans le circuit électrique de l'au moins une bobine (WGE) de la moitié de transmetteur (TRG) liée à l'appareil.
